# EUROPÄISCHE PATENTSCHRIFT

(11) **EP 3 927 281 B1**
(45) Veröffentlichungstag und Bekanntmachung des Hinweises auf die Patenterteilung: **15.02.2023**
(21) Anmeldenummer: 20703516.3
(22) Anmeldetag: 22.01.2020
(51) Int. Cl.: A61C 19/05

(54) **OKKLUSIONSKONTROLLSYSTEM UND VERFAHREN ZUR OKKLUSIONSKONTROLLE**
OCCLUSION CHECKING SYSTEM AND OCCLUSION CHECKING METHOD
SYSTÈME DE CONTRÔLE DE L'OCCLUSION ET PROCÉDÉ POUR LE CONTRÔLE DE L'OCCLUSION

(30) Priorität: 21.02.2019 DE 102019104382
(43) Veröffentlichungstag der Anmeldung: 29.12.2021
(73) Patentinhaber: Image Instruments GmbH, 09123 Chemnitz (DE)
(72) Erfinder: KÜHNERT, Tom, 09126 Chemnitz (DE); KÜHNERT, Rolf, 09123 Chemnitz (DE)
(74) Vertreter: Steiniger, Carmen
(86) Internationale Anmeldenummer: PCT/IB2020/050491
(87) Internationale Veröffentlichungsnummer: WO 2020/170050

(56) Entgegenhaltungen:
- EP-A1- 0 025 201
- DE-A1- 4 038 572
- DE-B4-102010 018 825
- US-A- 4 468 198
- US-A- 5 743 732
- US-B2- 8 021 149

## Beschreibung

Die vorliegende Erfindung betrifft ein Okklusionskontrollsystem und Verfahren zur Okklusionskontrolle.

Dentale Modelle spielen in der Zahnmedizin / Zahnheilkunde eine wichtige Rolle, da sie den Zahnstatus und die gegenseitige Kieferlage und damit die Okklusion, also den Kontakt zwischen den Zähnen des Oberkiefers und des Unterkiefers, geometrisch korrekt abbilden und dadurch sowohl für eine diagnostische Befunderhebung als auch für Zwecke einer Behandlungsplanung genutzt werden können.

In Kombination mit Artikulatoren, welche Geräte sind, mit welchen eine Kiefergelenksbewegung mechanisch simuliert werden kann, oder Axiografiesystemen, die einer elektronischen Vermessung einer Kieferbewegung dienen, lassen sich dentale Modelle zusätzlich auch für dynamische Messungen und Planungen verwenden.

Dentale Modelle werden traditionell über Abdrucknahme an einem Patienten, z. B. mit einem Abdrucklöffel in eine Abdruckmasse aus Silikon oder einem anderen aushärtbaren Material, darauf folgendes Ausgießen des ausgehärteten Abdrucks mit Gips oder Kunststoff sowie anschließendes Trimmen und Sockeln in einem Dentallabor gefertigt.

Mit der Verfügbarkeit technisch ausgereifter Lösungen für Modell- und Intraoralscanner werden physische dentale Modelle zunehmend digitalisiert oder von Beginn an durch Scannen im Mund des Patienten digital erstellt. Man spricht dann i. a. von digitalen oder virtuellen Modellen.

Die Verwendung digitaler Modelle in Verbindung mit geeigneten Softwareanwendungen anstelle physischer Modelle bringt eine Reihe von Vorteilen in Diagnostik, Planung und Beratung mit sich. Neben Einsparungen bei Material- und Präparationsaufwendungen, Erleichterungen bei der Erstellung digitaler Arbeitsmodelle und Verbesserungen in der Genauigkeit der Kieferwiedergabe können vor allem Planungstätigkeiten einschließlich der Fertigung von Behandlungsapparaturen und Hilfsmitteln wesentlich effektiver umgesetzt und prinzipiell neue Techniken angewandt werden.

Diesen Vorteilen in Bezug auf die Verwendung digitaler bzw. virtueller statt physischer Modelle stehen nur wenige Nachteile gegenüber. Einer dieser Nachteile ist die bei Nutzung virtueller Modelle nicht mehr gegebene haptische Information aus dem gegenseitigen Verschieben des physischen Oberkiefermodells relativ zu dem Unterkiefermodell, aus der ein Behandler bisher Rückinformationen für die Beurteilung der Okklusion ableiten konnte.

Als Alternative werden bisher für digitale Modelle in der Regel grafische, wie z. B. farbcodierte, Darstellungen der Okklusion verwendet. Allerdings bietet dies keinen gleichwertigen Ersatz der dem Behandler bekannten haptischen Rückkopplung.

Die Druckschrift EP 0 025 201 A1 beinhaltet ein Verfahren und eine Vorrichtung zum Reproduzieren von Kieferbewegungen, wobei im Mund eines Patienten am Unterkiefer und Oberkiefer Hilfsvorrichtungen befestigt werden, die bei Relativbewegungen zwischen Ober- und Unterkiefer Messdaten aufzeichnen. Dabei wird entsprechend den aufgezeichneten Messdaten ein ein Kiefermodell tragendes bewegbares Teil eines Artikulators geführt. Elektrische Abstandsmesseinrichtungen werden im Mund des Patienten angeordnet, messen die Abstände zwischen definierten Punkten an Oberkiefer und Unterkiefer während der Kieferbewegung und geben diese an einen Speicher ab. Das bewegbare Teil des Artikulators wird entsprechend den gespeicherten Daten in der Weise gesteuert, dass es den aufgezeichneten Bewegungsablauf wiedergibt, wobei die Kombinationen der gemessenen Abstände zwischen den definierten Punkten von Unterkiefer und Oberkiefer in der gleichen Weise wieder eingestellt werden wie bei dem Messvorgang.

Aus der Druckschrift DE 10 2010 018 825 B4 sind eine Vorrichtung und ein Verfahren zur Positionierung eines realen Unterkiefermodells und eines Oberkiefermodells zur Herstellung einer Schiene oder Prothese zur Korrektur der Kondylenposition eines Kiefergelenks bekannt. Auf einer lageveränderbaren Plattform einer Positioniereinrichtung wird ein Unterkiefermodell des Kiefers eines Patienten angeordnet, an einer Halterung der Positioniereinrichtung wird ein Oberkiefermodell des Patienten angeordnet. Die Positioniereinrichtung wird durch eine Steuer-/Auswerteeinrichtung gesteuert. Ein Auswerteprogramm erzeugt ein virtuelles erstes Unterkiefermodell sowie ein virtuelles zweites Unterkiefermodell und bewegt die virtuellen Unterkiefermodelle solange relativ zueinander, bis eine therapeutisch günstige Soll-Position zwischen dem virtuellen Oberkiefermodell und dem virtuellen zweiten Unterkiefermodell gegeben ist. Auf Basis dieser Relativposition zwischen dem virtuellen zweiten Unterkiefermodell und dem virtuellen Oberkiefermodell wird durch die Steuer-/Auswerteeinrichtung die Bewegung der Positioniereinrichtung gesteuert.

In der Druckschrift DE 40 38 572 A1 ist eine Vorrichtung zur Reproduktion der Bewegung des Unterkiefers in der zahnmedizinischen Technik beschrieben. Die Vorrichtung weist mehrere Stellmotoren auf, die ein Unterkiefermodell dreidimensional entsprechend den am Patienten gemessenen Bewegungen frei führen. Die Stellmotoren sind über Gestänge mit der Unterkieferträgerplatte verbunden, wobei die Angriffspunkte des Gestänges durch Gelenke gebildet sind und die Gelenkpunkte sich in der geometrischen Anordnung befinden, die auch bei der Registrierung am Patienten für die Messpunkte gewählt worden war.

Eine Vorrichtung zum Replizieren und Analysieren der Bewegung eines Unterkiefers in Bezug auf einen Oberkiefer mit Zahnmodellen davon ist in der Druckschrift US 8 021 149 B2 offenbart. Die Vorrichtung beinhaltet einen Grundrahmen, einen mit dem Grundrahmen verbundenen Arm und eine Aufhängungsanordnung, die durch eine Vielzahl von elektromechanischen Stellgliedern positionierbar ist. Der Arm verbindet sich mit dem Grundrahmen und trägt das Zahnmodell des Oberkiefers in einer festen Position zum Grundrahmen. Die Aufhängungsanordnung mit gegenüberliegenden ersten und zweiten Seiten trägt das Zahnmodell des Unterkiefers in Arbeitsbeziehung zum Zahnmodell des Oberkiefers. Die Stellglieder übertragen jeweils selektiv eine Bewegung auf die Seiten der Aufhängungsanordnung, sodass die während eines Aufzeichnungsprozesses erhaltene Bewegung des Unterkiefers in Echtzeit auf der Vorrichtung repliziert werden kann.

Die Druckschrift US 5 743 732 A schlägt eine Vorrichtung zur Modellierung der physiologischen Dynamik eines Kiefers vor. Die Vorrichtung umfasst ein Kiefermodell mit einem Unterkiefer und einem Oberkiefer; einen mit dem Kiefermodell gekoppelten Belastungsmechanismus zum Aufbringen einer Okklusionskraft auf den Unterkiefer und den Oberkiefer; einen oder mehrere mit dem Unterkiefer des Kiefermodells gekoppelte Mechanismen zum Bewegen des Unterkiefers in Bezug auf den Oberkiefer; und eine Last- oder Kraftmessvorrichtung zum Erfassen von Okklusionskräften auf den Unterkiefer und den Oberkiefer des Kiefermodells. Der Unterkiefer wird durch Elektromotoren seitlich und vorstehend bewegt. Ein Dehnungsmessstreifen kann mit der Lastaufnahmevorrichtung gekoppelt werden, um die von der Abtastvorrichtung erfassten Kräfte zu messen und anzuzeigen. Ein digitaler Prozessor kann auch zum Speichern und Aufzeichnen der vom Dehnungsmessstreifen gemessenen Kräfte verwendet werden.

Eine Vorrichtung zur Wiedergabe von Unterkieferbewegungen ist in der Druckschrift US 4,468,198 A beschrieben. Eine Trägerplatte für Unterkiefermodelle, auf der ein Unterkiefermodell befestigt ist, wird als starre Ebene betrachtet. Drei in dieser starren Ebene enthaltene Punkte werden ausgewählt und markiert. Drei Referenzpunkte werden für die Wiedergabe jeweils entsprechend einem der markierten Punkte und in einer vorbestimmten dimensionalen Beziehung dazu eingestellt. Verbindungsmittel ermöglichen eine freie Drehung und Biegung der jeweiligen Referenzpunkte zur Wiedergabe. Gleitführungsmittel ermöglichen ein freies Gleiten der jeweiligen Verbindungsmittel in einer der orthogonalen dreidimensionalen Richtungen X, Y, Z. Über Antriebsmittel werden die jeweiligen Gelenkmittel in eine der Richtungen angetrieben. Die resultierenden Bewegungen der Referenzpunkte werden zur Reproduktion synthetisiert, um die starre Platte, die die Trägerplatte des Unterkiefermodells bildet, einer dreidimensionalen Bewegung zu unterziehen.

Es ist daher die Aufgabe der vorliegenden Erfindung, ein Okklusionssystem und ein Verfahren zur Okklusionskontrolle zur Verfügung zu stellen, bei welchen trotz Nutzung eines virtuellen Dentalmodells eine haptische Rückkopplung zur Okklusion analog zum Empfinden am physischen Dentalmodell erzeugt wird.

Diese Aufgabe wird zum einen durch ein Okklusionskontrollsystem gelöst, das eine Datenverarbeitungs- und Steuereinrichtung, auf der Dimensionsdaten eines ein Oberkiefermodell und ein Unterkiefermodell aufweisenden digitalen Dentalmodells gespeichert sind, ein mit der Datenverarbeitungs- und Steuereinrichtung durch wenigstens ein Daten-und/oder Signalübertragungsmedium gekoppeltes, physisches Stellvertretermodell mit einem Oberkieferstellvertretermodell und einem damit mechanisch gekoppelten Unterkieferstellvertretermodell, die manuell translatorisch und rotatorisch relativ zueinander in einer Verstellebene bewegbar sind, und wenigstens eine mit der Datenverarbeitungs-und Steuereinrichtung gekoppelte Erfassungseinrichtung, mit der Positionsänderungen des Oberkieferstellvertretermodells und des Unterkieferstellvertretermodells erfassbar sind, aufweist, wobei zwischen dem Oberkieferstellvertretermodell und dem Unterkieferstellvertretermodell wenigstens drei durch Ansteuerung von der Datenverarbeitungs- und Steuereinrichtung in Abhängigkeit von einer durch die Datenverarbeitungs- und Steuereinrichtung aus den Positionsänderungen des Oberkieferstellvertretermodells und des Unterkieferstellvertretermodells berechneten Relativstellung zwischen dem Oberkiefermodell und dem Unterkiefermodell in ihrer Länge verstellbare und durch diese Längenverstellung einen Relativabstand zwischen dem Oberkieferstellvertretermodell und dem Unterkieferstellvertretermodell ändernde Abstandselemente, die die Verstellebene definieren und über die das Oberkieferstellvertretermodell und das Unterkieferstellvertretermodell in Flächenkontakt miteinander sind, vorgesehen sind.

Das erfindungsgemäße Okklusionskontrollsystem vereint die Vorteile digitaler Dentalsysteme für die Okklusionskontrolle mit dem durch ein physisches Dentalmodell einem Anwender vermittelten haptischen Gefühl, aus welchem er erkennt, dass beispielsweise eine weitere Relativbewegung zwischen Ober- und Unterkiefermodell nicht mehr möglich ist oder Ober- und Unterkiefermodell nicht geeignet in Kontakt miteinander sind.

Auf der Datenverarbeitungs- und Steuereinrichtung des erfindungsgemäßen Okklusionskontrollsystems können in einem Mund eines Patienten gescannte Dimensionsdaten des Ober- und Unterkiefers des Patienten vorteilhaft gespeichert, zu einem digitalen Oberkiefermodell und Unterkiefermodell umgesetzt und rechentechnisch verarbeitet werden.

Darüber hinaus besitzt das erfindungsgemäße Okklusionskontrollsystem ein physisches Stellvertretermodell. Das physische Stellvertretermodell weist ein Oberkieferstellvertretermodell und ein damit mechanisch gekoppeltes Unterkieferstellvertretermodell auf. Das Oberkiefer- als auch das Unterkieferstellvertretermodell sind nicht mit einem physischen Oberkiefer- und Unterkiefermodell, wie sie aus dem Stand der Technik bekannt sind, vergleichbar. Zum Beispiel weist weder das Oberkiefer- noch das Unterkieferstellvertretermodell einem realen Ober- und Unterkiefer entsprechende Zahnbögen und/oder Dimensionen auf. An dem Stellvertretermodell ist jedoch, ähnlich wie es ein Anwender von physischen Dentalmodellen kennt, das Oberkieferstellvertretermodell relativ zu dem Unterkieferstellvertretermodell manuell verschiebbar. Die manuelle Verschiebbarkeit ist bei dem Stellvertretermodell jedoch nur in einer Verstellebene möglich.

Bei dem Stellvertretermodell, das auch Mockup genannt werden kann, handelt es sich um eine abstrakte physische Realisierung oder Abbildung eines aus Ober- und Unterkieferzahnbogen in Okklusion bestehenden Dentalmodells. Das Stellvertretermodell interagiert sowohl als Eingabe- als auch als Ausgabegerät für die Datenverarbeitungs- und Steuereinrichtung und die darauf befindlichen Speicher und ausgeführten Programme.

An dem Stellvertretermodell ist ferner eine Erfassungseinrichtung vorgesehen, durch die eine manuell veränderte Relativstellung des Oberkieferstellvertretermodells zu dem Unterkieferstellvertretermodell erfasst und an die Datenverarbeitungs- und Steuereinrichtung übermittelt wird. Diese arbeitet die veränderte Relativstellung in Echtzeit in das digitale Dentalmodell ein. Dabei berechnet die Datenverarbeitungs- und Steuereinrichtung die jeweils vorliegende Okklusion am digitalen Ober- und Unterkiefermodell. Hierbei wird durch die Datenverarbeitungs- und Steuereinrichtung beispielsweise festgestellt, ob eine oder mehreren Durchdringung(en) und/oder eine Entkopplung von Ober- und Unterkiefermodell vorliegen. Unter einer Entkopplung ist hierbei zu verstehen, dass das Oberkiefermodell mit dem Unterkiefermodell an weniger als drei Punkten in Kontakt ist. Die Datenverarbeitungs- und Steuereinrichtung erzeugt daraufhin wenigstens ein Signal und sendet dieses an das Stellvertretermodell.

Durch die Abstandselemente wird/werden der Abstand und/oder die Relativstellung zwischen dem Oberkieferstellvertretermodell und dem Unterkieferstellvertretermodell temporär festgelegt. Ein Verschieben und/oder Drehen des Oberkieferstellvertretermodells und/oder des Unterkieferstellvertretermodells in einer durch die aktuelle Position der Abstandselemente definierten Ebene ist dabei möglich.

Anhand des jeweiligen von der Datenverarbeitungs- und Steuereinrichtung an das Stellvertretermodell gesendeten Signals wird bei Vorliegen von wenigstens einer rechentechnisch ermittelten Durchdringung oder Entkopplung die Länge wenigstens eines der Abstandselemente so weit geändert, dass die jeweilige Durchdringung oder Entkopplung am digitalen Dentalmodell aufgehoben ist.

Durch die Längenänderung wenigstens eines der Abstandselemente entsteht eine Änderung der Neigung zwischen dem Oberkieferstellvertretermodell und dem Unterkieferstellvertretermodell. Diese Änderung der Ausrichtung des Oberkieferstellvertretermodells relativ zu dem Unterkieferstellvertretermodell ist mit einer an einem physischen Dentalmodell bei identischer Relativbewegung der Teilkiefer verursachten haptischen Rückwirkung vergleichbar.

Durch die Längenänderung wenigstens eines der Abstandselemente verändert sich wenigstens ein Abstand zwischen dem Oberkieferstellvertretermodell und dem Unterkieferstellvertretermodell, was durch den Anwender des Okklusionskontrollsystems haptisch erfasst wird. Durch diese haptische Rückkopplung erfährt der Anwender unmittelbar, dass beispielsweise bestimmte Weiterbewegungen von Oberkieferstellvertretermodell und/oder Unterkieferstellvertretermodell an dem Stellvertretermodell nicht möglich sind.

Somit ist es bei dem erfindungsgemäßen Okklusionskontrollsystem möglich, an dem Stellvertretermodell eine Okklusionslage zwischen dem nur digital vorliegenden Oberkiefermodell und Unterkiefermodell haptisch zu erfassen bzw. zu erfühlen, indem das Oberkieferstellvertretermodell und das Unterkieferstellvertretermodell gegeneinander verschoben werden.

Das erfindungsgemäße Okklusionskontrollsystem ist eine Einrichtung zur Simulation einer haptischen Rückwirkung aus einer Relativverschiebung von in dem Oberkiefermodell und dem Unterkiefermodell enthaltenen virtuellen Oberkiefer- und Unterkieferzahnbogen in Okklusion durch Verwendung des Stellvertretermodells. Dabei ist die haptische Rückwirkung im Hinblick auf die qualitative Beurteilung der Okklusion vergleichbar mit der haptischen Rückwirkung an einem entsprechend bewegten physischen Dentalmodell.

In einer vorteilhaften Ausführungsform der vorliegenden Erfindung weist das Okklusionskontrollsystem ferner eine mit der Datenverarbeitungs- und Steuereinrichtung gekoppelte Anzeigeeinrichtung auf, auf der das Oberkiefermodell und das Unterkiefermodell sowie deren Relativstellung in Abhängigkeit von Relativbewegungen des Oberkieferstellvertretermodells und des Unterkieferstellvertretermodells relativ zueinander anzeigbar sind. Mit Hilfe der Anzeigeeinrichtung, wie einem Bildschirm, können das Oberkiefermodell und das Unterkiefermodell beispielsweise farbig grafisch dargestellt werden. Dabei können beispielsweise mit speziellen Farben Durchdringungen und Entkopplung zwischen Oberkiefermodell und Unterkiefermodell grafisch angezeigt werden. Dadurch erhält der Anwender zusätzlich zu der haptischen Information von dem Stellvertretermodell auch visuelle Informationen zur jeweils bestehenden Okklusion. Die Anzeigeeinrichtung kann alternativ oder zusätzlich zu der visuellen Okklusionsanzeige auch eine akustische Okklusionsanzeige zur Verfügung stellen. Beispielsweise können bestimmte Tönen bei Vorliegen einer Durchdringung durch die Anzeigeeinrichtung ausgegeben werden.

In Ausführungsformen der vorliegenden Erfindung sind die Abstandselemente entweder einseitig fest mit dem Oberkieferstellvertretermodell verbunden und auf dem Unterkieferstellvertretermodell gleitbar vorgesehen oder einseitig fest mit dem Unterkieferstellvertretermodell verbunden und auf dem Oberkieferstellvertretermodell gleitbar vorgesehen oder es ist zwischen dem Oberkieferstellvertretermodell und dem Unterkieferstellvertretermodell eine Zwischenplatte vorgesehen, an oder in welcher die Abstandselemente fixiert sind und von deren einer Seite die Abstandselemente in Richtung des Oberkieferstellvertretermodells längenveränderbar sind und von deren anderer Seite die Abstandselemente in Richtung des Unterkieferstellvertretermodells längenveränderbar sind.

Es hat sich als günstig erwiesen, wenn die Erfassungseinrichtung wenigstens einen mit dem Oberkieferstellvertretermodell und/oder dem Unterkieferstellvertretermodell mechanisch gekoppelten Steuerkörper aufweist, der Schub- und/oder Drehkräfte, die auf das Oberkieferstellvertretermodell und/oder das Unterkieferstellvertretermodell ausgeübt werden, in Signale für die Datenverarbeitungs- und Steuereinrichtung umwandelt. Die Erfassungseinrichtung kann beispielsweise wie eine 3D-Maus, zwei 2D-Mäuse oder ein Joystick funktionieren. Damit kann durch die Erfassungseinrichtung die Relativbewegung zwischen dem Oberkieferstellvertretermodell und dem Unterkieferstellvertretermodell erfasst und in Echtzeit an die Datenverarbeitungs- und Steuereinrichtung übertragen werden.

Als Abstandselemente eignen sich bei der vorliegenden Erfindung insbesondere längenverstellbare Aktuatoren, Stellmotoren, Piezoelemente und/oder Schwingspulen, wie so genannte Voice Coils.

In einer bevorzugten Ausgestaltung des erfindungsgemäßen Okklusionskontrollsystems ist das Oberkieferstellvertretermodell mit dem Unterkieferstellvertretermodell durch wenigstens ein Feder- oder Druckelement gekoppelt. Dadurch kann ein dauerhafter mechanischer Kontakt zwischen dem Oberkieferstellvertretermodell und dem Unterkieferstellvertretermodell realisiert werden.

In einer Variante der Erfindung weist das Okklusionssystem eine Kühlung für die Abstandselemente auf. Eine Kühlung kann beispielsweise dann von Vorteil sein, wenn als Abstandselemente Voice Coils oder Piezoelemente verwendet werden. Beispielsweise können die Abstandselemente in einem gekühlten Gehäuse vorgesehen sein. Dadurch kann eine hochgenaue Arbeitsweise der Abstandselemente ermöglicht werden.

Vorzugsweise ist/sind das Oberkieferstellvertretermodell und/oder das Unterkieferstellvertretermodell (eine) an eine typische Größe einer Innenhandgreiffläche eines Erwachsenen angepasste Halbschale(n) oder Platte(n). Entsprechend einfach ist das Stellvertretermodell handhabbar.

Die Aufgabe wird ferner durch ein Verfahren zur Okklusionskontrolle gelöst, bei dem auf einer Datenverarbeitungs- und Steuereinrichtung Dimensionsdaten eines ein Oberkiefermodell und ein Unterkiefermodells aufweisenden digitalen Dentalmodells gespeichert werden, an einem physisches Stellvertretermodell, das ein Oberkieferstellvertretermodell und ein damit mechanisch gekoppeltes Unterkieferstellvertretermodell aufweist, das Oberkieferstellvertretermodell und das Unterkieferstellvertretermodell manuell relativ zueinander translatorisch und/oder rotatorisch in einer Verstellebene bewegt werden, Positionsänderungen von dem Oberkieferstellvertretermodell und dem Unterkieferstellvertretermodell durch eine Erfassungseinrichtung erfasst und an die Datenverarbeitungs- und Steuereinrichtung übertragen werden, die Datenverarbeitungs- und Steuereinrichtung aus diesen Positionsänderungen eine zugehörige Relativstellung zwischen dem Oberkiefermodell und dem Unterkiefermodell berechnet und dann, wenn bei dieser Relativstellung wenigstens eine Zahnbogendurchdringung und/oder wenigstens eine Zahnbogenentkopplung von dem Oberkiefermodell und dem Unterkiefermodell vorliegt, wenigstens ein Signal an das Stellvertretermodell übermittelt, durch das wenigstens eines von wenigstens drei zwischen dem Oberkieferstellvertretermodell und dem Unterkieferstellvertretermodell vorgesehenen Abstandselementen, die die Verstellebene zwischen dem Oberkieferstellvertretermodell und dem Unterkieferstellvertretermodell definieren, in seiner Länge verstellt wird, wodurch an dem Stellvertretermodell eine haptisch erfassbare Änderung der Relativstellung zwischen dem Oberkieferstellvertretermodell und dem Unterkieferstellvertretermodell bewirkt wird.

Das erfindungsgemäße Verfahren ermöglicht eine haptische Beurteilung einer Okklusion an dem virtuellen Dentalmodell mittels des Stellvertretermodells.

Bei dem erfindungsgemäßen Verfahren wird an dem Stellvertretermodell manuell eine Relativbewegung zwischen dem Oberkieferstellvertretermodell und dem Unterkieferstellvertretermodell bewirkt. Diese Relativbewegung wird durch die Erfassungseinrichtung erfasst und in Form wenigstens eines Signals an die Datenverarbeitungs- und Steuereinrichtung übergeben. Von der Datenverarbeitungs- und Steuereinrichtung wird dann eine für einen vorausgesetzten okklusalen Kontakt gegebenenfalls erforderliche Korrekturbewegung des virtuellen Oberkiefer- und des virtuellen Unterkiefermodells berechnet und über eine Schnittstelle der Datenverarbeitungs- und Steuereinrichtung an die Abstandselemente des Stellvertretermodells zurückgegeben, um eine Korrektur des Stellvertretermodells zu erzwingen.

In einer bevorzugten Ausführungsform des erfindungsgemäßen Verfahrens werden mit einer mit der Datenverarbeitungs- und Steuereinrichtung gekoppelten Anzeigeeinrichtung das Oberkiefermodell und das Unterkiefermodell sowie deren Relativstellung in Abhängigkeit von Relativbewegungen des Oberkieferstellvertretermodells und des Unterkieferstellvertretermodells relativ zueinander angezeigt. Die mit der Anzeigeeinrichtung mögliche Visualisierung ist eine direkte grafische Wiedergabe der Stellung des Oberkiefermodells zum Unterkiefermodell, die den Anwender unterstützt.

In einer speziellen Weiterbildung des erfindungsgemäßen Verfahrens ist vorgesehen, dass eine für einen vorausgesetzten okklusalen Kontakt zwischen dem Oberkiefermodell und dem Unterkiefermodell berechnete und über eine Schnittstelle der Datenverarbeitungs- und Steuereinrichtung an die Abstandselemente des Stellvertretermodells zurückgegebene Korrekturbewegung des Oberkiefermodells und/oder des Unterkiefermodells im Vergleich zu einer bei einem reale Kieferdimensionen aufweisenden physischen Dentalmodell erforderlichen Längenverstellung proportional vergrößert ist. Wird also durch die Datenverarbeitungs- und Steuereinrichtung wenigstens eine Zahnbogendurchdringung und/oder wenigstens eine Zahnbogenentkopplung von dem Oberkiefermodell und dem Unterkiefermodell errechnet, wird die Länge oder Auslenkung des wenigstens einen Abstandselementes stärker verändert, als dies bei einem realen Dentalmodell der Fall wäre. Die errechnete Korrekturauslenkung der Kiefermodelle zueinander wird somit an den Auflagepunkten des Stellvertretermodells um einen Faktor X > 1 überhöht, um die differentielle Änderung der Anstellung der Ebene und damit die Kraftrückwirkung beispielsweise eines Griffstücks des Stellvertretermodells auf eine Hand eines Anwenders, also die haptische Rückwirkung, zu verstärken. Durch die Vergrößerung der haptischen Rückwirkung auf den Anwender kann die Effektivität des erfindungsgemäßen Verfahrens noch verbessert werden.

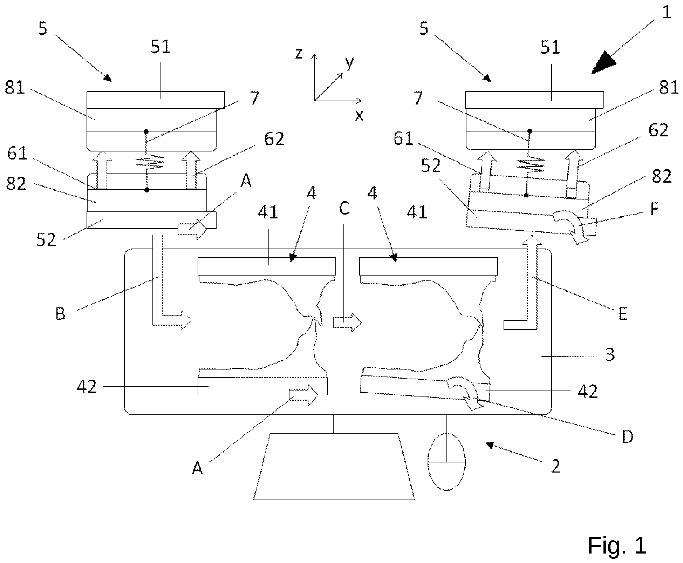

Die vorliegende Erfindung wird im Folgenden anhand einer Figur näher erläutert, wobei
- Figur 1: schematisch den Prinzipaufbau einer Ausführungsform eines erfindungsgemäßen Okklusionskontrollsystems und dessen Arbeitsweise veranschaulicht.

Figur 1 zeigt schematisch den Prinzipaufbau einer Ausführungsform eines erfindungsgemäßen Okklusionskontrollsystems 1.

Das Okklusionskontrollsystem 1 weist eine Datenverarbeitungs- und Steuereinrichtung 2 mit einer Anzeigeeinrichtung 3 auf. Die Datenverarbeitungs- und Steuereinrichtung 2 ist in dem gezeigten Ausführungsbeispiel ein Computer, kann jedoch auch ein Laptop oder ein Smartphone sein. Die Anzeigeeinrichtung 3 ist in dem dargestellten Ausführungsbeispiel ein Bildschirm, kann jedoch auch alternativ oder zusätzlich dazu eine Tonausgabeeinheit, wie einen Lautsprecher, aufweisen.

Das Okklusionskontrollsystem 1 weist ferner ein physisches Stellvertretermodell 5 auf, welches in Figur 1 links oben in einer Anfangsstellung und rechts oben in einer Endstellung gezeigt ist. Die gezeigte Anfangs- und Endstellung ist jeweils nur beispielhaft und kann auch jeweils eine andere Neigung und andere Abstände zwischen den Teilen des Stellvertretermodells 5 aufweisen.

Das Stellvertretermodell 5 weist ein physisches Oberkieferstellvertretermodell 51 und ein gegenüber dem Oberkieferstellvertretermodell 51 befindliches, physisches Unterkieferstellvertretermodell 52 auf. Das Oberkieferstellvertretermodell 51 ist in dem gezeigten Ausführungsbeispiel mit dem Unterkieferstellvertretermodell 52 mechanisch über ein Federelement 7 verbunden, kann jedoch in anderen Ausführungen der Erfindung auch auf andere Art und Weise, z. B. mittels hydraulischer und/oder pneumatischer und/oder elektromagnetischer Kraftwirkung, verbunden sein.

Das Oberkieferstellvertretermodell 51 als auch das Unterkieferstellvertretermodell 52 sind in dem gezeigten Ausführungsbeispiel einfache Platten, können jedoch auch einfache Halbschalen sein. In dem gezeigten Ausführungsbeispiel haben das Oberkieferstellvertretermodell 51 und das Unterkieferstellvertretermodell 52 jeweils eine an eine Innenhandgreiffläche eines Erwachsenen angepasste Größe, wobei eine Innenhand mit um das jeweilige Modell 51 bzw. 52 gekrümmten Fingern gemeint ist, sodass sie jeweils mit einer Hand erfasst und relativ zueinander verschoben oder verdreht werden können. In anderen Ausführungsformen der vorliegenden Erfindung ist es generell ausreichend, wenn entweder das Oberkieferstellvertretermodell oder das Unterkieferstellvertretermodell vom Anwender erfasst werden kann. Möglich ist dies z. B. in Auftisch-Ausführungen des Stellvertretermodells, bei welchen Verschiebung und Rückwirkung nur über eine Hand vermittelt werden.

Zwischen dem Oberkieferstellvertretermodell 51 und dem Unterkieferstellvertretermodell 52 sind drei in ihrer Länge verstellbare Abstandselemente vorgesehen, wobei in der gezeigten Ansicht jeweils nur zwei Abstandselemente 61, 62 davon zu sehen sind. In anderen Ausführungsformen der vorliegenden Erfindung können grundsätzlich auch mehr als drei Abstandselemente zum Einsatz kommen. Die Abstandselemente 61, 62 sind in der gezeigten Ausführungsform stiftförmig ausgebildet, können in anderen Ausführungsformen der Erfindung jedoch auch eine andere Form aufweisen, beispielsweise kegel oder pyramidenförmig ausgebildet sein.

Über die Abstandselemente, die hier eine Drei-Punkt-Auflage bilden, sind das Oberkieferstellvertretermodell 51 und das Unterkieferstellvertretermodell 52 miteinander in Flächenkontakt. Der Flächenkontakt wird über Kräfte in Richtung der Drei-Punkt-Auflage gewährleistet. In dem gezeigten Ausführungsbeispiel wird diese Kraft mittels des Federelementes 7 erzeugt.

Die Abstandselemente definieren eine Verstellebene, in welcher das Oberkieferstellvertretermodell 51 relativ zu dem Unterkieferstellvertretermodell 52 bewegt werden kann. Diese Bewegbarkeit beinhaltet zwei translatorische Freiheitsgrade, in dem Ausführungsbeispiel in x- und in y-Richtung, und einen rotatorischen Freiheitsgrad, also eine Drehbarkeit in der Verstellebene.

Die Abstandselemente 61, 62 sind aktive Verstellelemente und können mit der Datenverarbeitungs- und Steuereinrichtung angesteuert werden. Dabei kann jedes der Abstandselemente 61, 62 separat angesteuert werden. Speziell sind die drei Abstandselemente 61, 62 längenverstellbare Aktuatoren.

Das Oberkieferstellvertretermodell 51 ist relativ zu dem Unterkieferstellvertretermodell 52 translatorisch als auch rotatorisch in der Verstellebene bewegbar. Die Konstruktion der Drei-Punkt-Auflage erlaubt eine manuelle Verschiebung des Oberkieferstellvertretermodells 51 und/oder des Unterkieferstellvertretermodells 52 in der durch die Auflagefläche der drei Abstandselemente ausgebildeten und damit definierten Verstellebene unter Beibehaltung des Flächenkontaktes.

In dem gezeigten Ausführungsbeispiel sind die Abstandselemente 61, 62 fest mit dem Unterkieferstellvertretermodell 52 verbunden und das Oberkieferstellvertretermodell 51 kann auf den durch die Pfeilspitzen der Abstandselemente 61, 62 symbolisierten Auflageflächen der Abstandselemente 61, 62 gleiten. In anderen Ausführungsformen der vorliegenden Erfindung kann es auch umgekehrt sein, sodass die Abstandselemente 61, 62 an dem Oberkieferstellvertretermodell 51 befestigt sind und das Unterkieferstellvertretermodell 52 gleitet auf entsprechend unten vorgesehenen Auflageflächen der Abstandselemente. In anderen, nicht gezeigten Ausführungsformen der vorliegen Erfindung kann zwischen dem Oberkieferstellvertretermodell 51 und dem Unterkieferstellvertretermodell 52 auch eine Zwischenplatte vorgesehen sein, an oder in der die Abstandselemente befestigt sind und von der diese in beide Richtungen, also hin zu dem Oberkieferstellvertretermodell 51 als auch hin zu dem Unterkieferstellvertretermodell 52 auskragen.

In dem gezeigten Ausführungsbeispiel wird das Unterkieferstellvertretermodell 52, wie es schematisch durch den Pfeil A dargestellt ist, relativ zu dem Oberkieferstellvertretermodell 51 beispielsweise in x-Richtung verschoben.

Die Anfangsstellung als auch die Relativverschiebung zwischen dem Oberkieferstellvertretermodell 51 und dem Unterkieferstellvertretermodell 52 wird durch eine hier nur schematisch angedeutete Erfassungseinrichtung 81, 82 erfasst und, wie es durch den Pfeil B schematisch gezeigt ist, in Form von entsprechenden Signalen an die Datenverarbeitungs- und Steuereinrichtung 2 übermittelt. Hierfür weist die Datenverarbeitungs-und Steuereinrichtung 2 eine entsprechende Eingabeschnittstelle auf.

Die Erfassungseinrichtung 81, 82 weist in dem hier gezeigten Ausführungsbeispiel zwei kugelförmige Steuerkörper auf, mit welchen Schub- und/oder Drehkräfte, die auf das Oberkieferstellvertretermodell 51 und/oder das Unterkieferstellvertretermodell 52 ausgeübt werden, in Signale für die Datenverarbeitungs- und Steuereinrichtung 2 umgewandelt werden. Speziell kann die Erfassungseinrichtung 81, 82 wie eine optische oder mechanische 3D-Maus oder ein Joystick ausgebildet sein.

In der Datenverarbeitungs- und Steuereinrichtung 2 sind Dimensionsdaten eines vorher in einem Mund eines Patienten gescannten Oberkiefers und Unterkiefers gespeichert, woraus die Datenverarbeitungs- und Steuereinrichtung 2 ein digitales Dentalmodell 4 mit einem digitalen Oberkiefermodell 41 und einem digitalen Unterkiefermodell 42 erstellt, welche in dem gezeigten Ausführungsbeispiel auf der Anzeigeeinrichtung 3 grafisch dargestellt sind.

Die an dem Stellvertretermodell 5 vorgenommene Relativverschiebung zwischen dem Oberkieferstellvertretermodell 51 und dem Unterkieferstellvertretermodell 52 wird durch ein entsprechendes Programm, das auf der Datenverarbeitungs- und Steuereinrichtung 2 ausgeführt wird, an dem Dentalmodell 4, wie es schematisch durch den Pfeil A' gezeigt ist, digital vorgenommen. Das Programm überträgt die an dem Stellvertretermodell gemessene Relativbewegung auf die virtuelle Repräsentation von Oberkiefer und Unterkiefer, also auf das virtuelle Oberkiefermodell 41 und das virtuelle Unterkiefermodell 42, am konkreten zu bewertenden digitalen Dentalmodell 4 in Okklusion.

Dies führt in dem gezeigten Beispiel dazu, dass der Oberkiefer 41 den Unterkiefer 41 durchdringt, was physisch nicht umsetzbar ist. Daraus berechnet die Datenverarbeitungs- und Steuereinrichtung 2 in einem durch den Pfeil C angedeuteten Rechenschritt eine Korrektur, die in dem gezeigten Ausführungsbeispiel eine Veränderung der Neigung des Unterkiefermodells 42, wie durch den Pfeil D gezeigt, zur Folge hat. Die Datenverarbeitungs- und Steuereinrichtung 2 berechnet also für die vorgegebene Relation der virtuellen Kieferobjekte die durch den okklusalen Kontakt von virtuellem Oberkiefer- und Unterkieferzahnbogen zur Vermeidung von Durchdringungen oder Entkopplung erzwungene zugehörige Auslenkung von Oberkiefermodell und Unterkiefermodell.

Die so erzwungene Neigung und Position der Verstellebene wird von dem jeweiligen Programm über eine Ausgabe-Schnittstelle der Datenverarbeitungs- und Steuereinrichtung 2 an das Stellvertretermodell 5 übertragen. In dem gezeigten Ausführungsbeispiel wird hierbei aus der vom Programm berechneten Neigung wenigstens ein Steuersignal errechnet und dieses, wie durch den Pfeil E schematisch gezeigt, an das Stellvertretermodell 5 übermittelt. Mit dem Steuersignal wird wenigstens eines der drei Abstandselemente 61, 62 des Stellvertretermodells 5 angesteuert. Dabei erfolgt eine Änderung der Längeneinstellung der als Linearaktuatoren ausgebildeten Abstandselemente 61, 62.

In dem gezeigten Ausführungsbeispiel werden die Längen der Abstandselemente 61, 62 unterschiedlich geändert, wodurch sich ein Vorn-nach-unten-Kippen des Unterkieferstellvertretermodells 52 relativ zu dem Oberkieferstellvertretermodell 51 ergibt. Dabei bleibt die mechanische Kopplung zwischen dem Oberkieferstellvertretermodell 51 und dem Unterkieferstellvertretermodell 52 aufgrund des Federelementes 7 erhalten.

Durch die Längenänderung der Abstandselemente 61, 62 verändert sich die Neigung der Drei-Punkt-Auflage und damit die gegenseitige Relation des Oberkieferstellvertretermodells 51 und des Unterkieferstellvertretermodells 52.

Die Relativbewegung zwischen dem Oberkieferstellvertretermodell 51 und dem Unterkieferstellvertretermodell 52 kann der Anwender, der wenigstens eines der beiden Modelle in seinen Händen hält, direkt haptisch erfassen. Die verursachte mechanische Rückwirkung auf die Hand oder die Hände des Anwenders korreliert mit der haptischen Rückwirkung an einem entsprechend bewegten physischen Dentalmodell und simuliert diese.

Durch Modulation der Eingabe- und Ausgabesignale kann eine Optimierung des haptischen Wahrnehmungseffektes zum Zweck der besseren Beurteilung der okklusalen Relation erreicht werden.

## Patentansprüche

1. Okklusionskontrollsystem (1), wobei das Okklusionskontrollsystem (1) eine Datenverarbeitungs- und Steuereinrichtung (2), auf der Dimensionsdaten eines ein Oberkiefermodell (41) und ein Unterkiefermodell (42) aufweisenden digitalen Dentalmodells (4) gespeichert sind, ein mit der Datenverarbeitungs-und Steuereinrichtung (2) durch wenigstens ein Daten- und/oder Signalübertragungsmedium gekoppeltes, physisches Stellvertretermodell (5) mit einem Oberkieferstellvertretermodell (51) und einem damit mechanisch gekoppelten Unterkieferstellvertretermodell (52), die manuell translatorisch und rotatorisch relativ zueinander in einer Verstellebene bewegbar sind, und wenigstens eine mit der Datenverarbeitungs- und Steuereinrichtung (2) gekoppelte Erfassungseinrichtung (81, 82), mit der Positionsänderungen des Oberkieferstellvertretermodells (51) und des Unterkieferstellvertretermodells (52) erfassbar sind, aufweist, **dadurch gekennzeichnet, dass** zwischen dem Oberkieferstellvertretermodell (51) und dem Unterkieferstellvertretermodell (52) wenigstens drei, die Verstellebene zwischen dem Oberkieferstellvertretermodell (51) und dem Unterkieferstellvertretermodell (52) definierende und durch Ansteuerung von der Datenverarbeitungs- und Steuereinrichtung (2) in Abhängigkeit von einer durch die Datenverarbeitungs- und Steuereinrichtung (2) aus Positionsänderungen des Oberkieferstellvertretermodells (51) und des Unterkieferstellvertretermodells (52) berechneten Relativstellung zwischen dem Oberkiefermodell (41) und dem Unterkiefermodell (42) in ihrer Länge verstellbare und durch diese Längenverstellung eine Relativstellung zwischen dem Oberkieferstellvertretermodell (51) und dem Unterkieferstellvertretermodell (52) ändernde Abstandselemente (61, 62) vorgesehen sind.

2. Okklusionskontrollsystem nach Anspruch 1, **dadurch gekennzeichnet, dass** das Okklusionskontrollsystem (1) ferner eine mit der Datenverarbeitungs- und Steuereinrichtung (2) gekoppelte Anzeigeeinrichtung (3) aufweist, auf der das Oberkiefermodell (41) und das Unterkiefermodell (42) sowie deren Relativstellung in Abhängigkeit von Relativbewegungen des Oberkieferstellvertretermodells (51) und des Unterkieferstellvertretermodells (52) relativ zueinander anzeigbar sind.

3. Okklusionskontrollsystem nach einem der vorhergehenden Ansprüche, **dadurch gekennzeichnet, dass**
- die Abstandselemente (61, 62) einseitig fest mit dem Oberkieferstellvertretermodell (51) verbunden und auf dem Unterkieferstellvertretermodell (52) gleitbar vorgesehen sind oder
- die Abstandselemente (61, 62) einseitig fest mit dem Unterkieferstellvertretermodell (52) verbunden und auf dem Oberkieferstellvertretermodell (51) gleitbar vorgesehen sind oder
- zwischen dem Oberkieferstellvertretermodell (51) und dem Unterkieferstellvertretermodell (52) eine Zwischenplatte vorgesehen ist, an oder in welcher die Abstandselemente (61, 62) fixiert sind und von deren einer Seite die Abstandselemente (61, 62) in Richtung des Oberkieferstellvertretermodells (51) längenveränderbar sind und von deren anderer Seite die Abstandselemente (61, 62) in Richtung des Unterkieferstellvertretermodells (52) längenveränderbar sind.

4. Okklusionskontrollsystem nach einem der vorhergehenden Ansprüche, **dadurch gekennzeichnet, dass** die Erfassungseinrichtung (81, 82) wenigstens einen mit dem Oberkieferstellvertretermodell (51) und/oder dem Unterkieferstellvertretermodell (52) mechanisch gekoppelten Steuerkörper aufweist, mit dem Schub- und/oder Drehkräfte, die auf das Oberkieferstellvertretermodell (51) und/oder das Unterkieferstellvertretermodell (52) ausgeübt werden, in Signale für die Datenverarbeitungs- und Steuereinrichtung (2) umwandelbar sind.

5. Okklusionskontrollsystem nach einem der vorhergehenden Ansprüche, **dadurch gekennzeichnet, dass** die Abstandselemente (61, 62) längenverstellbare Aktuatoren, Stellmotoren, Piezoelemente und/oder Schwingspulen sind.

6. Okklusionskontrollsystem nach einem der vorhergehenden Ansprüche, **dadurch gekennzeichnet, dass** das Oberkieferstellvertretermodell (51) mit dem Unterkieferstellvertretermodell (52) durch wenigstens ein Feder- oder Druckelement gekoppelt ist.

7. Okklusionskontrollsystem nach einem der vorhergehenden Ansprüche, **dadurch gekennzeichnet, dass** das Okklusionskontrollsystem (1) eine Kühlung für die Abstandselemente (61, 62) aufweist.

8. Okklusionskontrollsystem nach einem der vorhergehenden Ansprüche, **dadurch gekennzeichnet, dass** das Oberkieferstellvertretermodell (51) und/oder das Unterkieferstellvertretermodell (52) (eine) an eine typische Größe einer Innenhandgreiffläche eines Erwachsenen angepasste Halbschale(n) oder Platte(n) ist/sind.

9. Verfahren zur Okklusionskontrolle, wobei auf einer Datenverarbeitungs- und Steuereinrichtung (2) Dimensionsdaten eines ein Oberkiefermodell (41) und ein Unterkiefermodell (42) aufweisenden digitalen Dentalmodells (4) gespeichert werden, an einem physisches Stellvertretermodell (5), das ein Oberkieferstellvertretermodell (51) und ein damit mechanisch gekoppeltes Unterkieferstellvertretermodell (52) aufweist, das Oberkieferstellvertretermodell (51) und das Unterkieferstellvertretermodell (52) manuell relativ zueinander translatorisch und/oder rotatorisch in einer Verstellebene bewegt werden, Positionsänderungen von dem Oberkieferstellvertretermodell (51) und dem Unterkieferstellvertretermodell (52) durch eine Erfassungseinrichtung (81, 82) erfasst und an die Datenverarbeitungs-und Steuereinrichtung (2) übertragen werden, die Datenverarbeitungs- und Steuereinrichtung (2) aus diesen Positionsänderungen eine zugehörige Relativstellung zwischen dem Oberkiefermodell (41) und dem Unterkiefermodell (42) berechnet und dann, wenn bei dieser Relativstellung wenigstens eine Zahnbogendurchdringung und/oder wenigstens eine Zahnbogenentkopplung von dem Oberkiefermodell (41) und dem Unterkiefermodell (42) vorliegt, wenigstens ein Signal an das Stellvertretermodell (5) übermittelt, durch das wenigstens eines von wenigstens drei zwischen dem Oberkieferstellvertretermodell (51) und dem Unterkieferstellvertretermodell (52) vorgesehenen Abstandselementen (61, 62), die die Verstellebene zwischen dem Oberkieferstellvertretermodell (51) und dem Unterkieferstellvertretermodell (52) definieren, in seiner Länge verstellt wird, wodurch an dem Stellvertretermodell (5) eine haptisch erfassbare Änderung der Relativstellung zwischen dem Oberkieferstellvertretermodell (51) und dem Unterkieferstellvertretermodell (52) bewirkt wird.

10. Verfahren nach Anspruch 9, **dadurch gekennzeichnet, dass** mit einer mit der Datenverarbeitungs- und Steuereinrichtung (2) gekoppelten Anzeigeeinrichtung (3) das Oberkiefermodell (41) und das Unterkiefermodell (42) sowie deren Relativstellung in Abhängigkeit von Relativbewegungen des Oberkieferstellvertretermodells (51) und des Unterkieferstellvertretermodells (52) relativ zueinander angezeigt werden.

11. Verfahren nach Anspruch 9 oder 10, **dadurch gekennzeichnet, dass** eine für einen vorausgesetzten okklusalen Kontakt zwischen dem Oberkiefermodell (41) und dem Unterkiefermodell (42) berechnete und über eine Schnittstelle der Datenverarbeitungs- und Steuereinrichtung (2) an die Abstandselemente (61, 62) des Stellvertretermodells (5) zurückgegebene Korrekturbewegung des Oberkiefermodells (41) und/oder des Unterkiefermodells (42) im Vergleich zu einer bei einem reale Kieferdimensionen aufweisenden physischen Dentalmodell erforderlichen Längenverstellung proportional vergrößert ist.

## Claims

1. Occlusion checking system (1), wherein the occlusion checking system (1) comprising a data-processing and control device (2), on which dimensional data of a digital dental model (4), which has an upper jaw model (41) and a lower jaw model (42), are stored, a physical representative model (5), which is coupled by at least one data and/or signal transmission medium to the data-processing and control device (2) and which has an upper jaw representative model (51) and a lower jaw representative model (52) mechanically coupled thereto, which models can be moved manually in translation and rotationally relative to one another in an adjustment plane, and at least one detection device (81, 82), which is coupled to the data-processing and control device (2) and by means of which positional changes of the upper jaw representative model (51) and the lower jaw representative model (52) can be detected,
**characterized in that**
at least three spacer elements (61, 62) are provided between the upper jaw representative model (51) and the lower jaw representative model (52), which spacer elements define the adjustment plane between the upper jaw representative model (51) and the lower jaw representative model (52), and of which the length can be adjusted by controlling the data-processing and control device (2) on the basis of a relative position between the upper jaw model (41) and the lower jaw model (42) calculated by the data-processing and control device (2) from position changes of the upper jaw representative model (51) and the lower jaw representative model (52), and which, as a result of this length adjustment, change a relative position between the upper jaw representative model (51) and the lower jaw representative model (52).

2. Occlusion checking system according to claim 1, **characterized in that** the occlusion checking system (1) further comprises an indicator device (3) coupled to the data-processing and control device (2), on which indicator device the upper jaw model (41) and the lower jaw model (42) and their relative position can be displayed relative to one another on the basis of relative movements of the upper jaw representative model (51) and the lower jaw representative model (52).

3. Occlusion checking system according to any of the preceding claims,
**characterized in that**
- the spacer elements (61, 62) are rigidly connected on one side to the upper jaw representative model (51) and are slidably provided on the lower jaw representative model (52) or
- the spacer elements (61, 62) are rigidly connected on one side to the lower jaw representative model (52) and are slidably provided on the upper jaw representative model (51) or
- an intermediate plate is provided between the upper jaw representative model (51) and the lower jaw representative model (52), on or in which intermediate plate the spacer elements (61, 62) are fixed and from one side of which intermediate plate the length of the spacer elements (61, 62) can be changed in the direction of the upper jaw representative model (51) and from the other side of which intermediate plate the length of the spacer elements (61, 62) can be changed in the direction of the lower jaw representative model (52).

4. Occlusion checking system according to one of the preceding claims, **characterized in that** the detection device (81, 82) has at least one control body mechanically coupled to the upper jaw representative model (51) and/or the lower jaw representative model (52), by means of which control body the thrust and/or torsional forces exerted on the upper jaw representative model (51) and/or the lower jaw representative model (52) can be converted into signals for the data-processing and control device (2).

5. Occlusion checking system according to one of the preceding claims, **characterized in that** the spacer elements (61, 62) are length-adjustable actuators, servomotors, piezo elements, and/or moving coils.

6. Occlusion checking system according to one of the preceding claims, **characterized in that** the upper jaw representative model (51) is coupled to the lower jaw representative model (52) by at least one spring or pressure element.

7. Occlusion checking system according to one of the preceding claims, **characterized in that** the occlusion checking system (1) has a cooling means for the spacer elements (61, 62).

8. Occlusion checking system according to one of the preceding claims,
**characterized in that** the upper jaw representative model (51) and/or the lower jaw representative model (52) is a half-shell or plate or are half-shells or plates adapted to a typical size of a palm grip surface of an adult.

9. Method for occlusion checking, wherein dimensional data of a digital dental model (4), which has an upper jaw model (41) and a lower jaw model (42), are stored on a data-processing and control device (2), at a physical representative model (5), which has an upper jaw representative model (51) and a lower jaw representative model (52) mechanically coupled thereto, the upper jaw representative model (51) and the lower jaw representative model (52) are moved manually relative to one another in translation and rotationally, position changes of the upper jaw representative model (51) and the lower jaw representative model (52) are detected by a detection device (81, 82) and are transferred to the data-processing and control device (2), the data-processing and control device (2) calculates from these position changes an associated relative position between the upper jaw model (41) and the lower jaw model (42) and then, if there is at least one dental arch penetration and/or at least one dental arch decoupling of the upper jaw model (41) and the lower jaw model (42) in this relative position, transmits at least one signal to the representative model (5), by means of which signal the length of at least one of the at least three spacer elements (61, 62) provided between the upper jaw representative model (51) and the lower jaw representative model (52) is adjusted, which spacer elements define the adjustment plane between the upper jaw representative model (51) and the lower jaw representative model (52), as a result of which, a haptically detectable change of the relative position between the upper jaw representative model (51) and the lower jaw representative model (52) is brought about at the representative model (5).

10. Method according to claim 9, **characterized in that,** by means of an indicator device (3) coupled to the data-processing and control device (2), the upper jaw model (41) and the lower jaw model (42) and their relative position are displayed relative to one another on the basis of relative movements of the upper jaw representative model (51) and the lower jaw representative model (52).

11. Method according to claim 9 or 10, **characterized in that** a correction movement of the upper jaw model (41) and/or of the lower jaw model (42), which correction movement is calculated for an assumed occlusal contact between the upper jaw model (41) and the lower jaw model (42) and returned to the spacer elements (61, 62) of the representative model (5) via an interface of the data processing and control device (2), is proportionally enlarged compared to a length adjustment required in a physical dental model having real jaw dimensions.

## Revendications

1. Système de contrôle d'occlusion (1), dans lequel le système de contrôle d'occlusion (1) présente un dispositif de traitement de données et de commande (2), sur lequel sont stockées des données de dimensions d'un modèle dentaire numérique (4) présentant un modèle de mâchoire supérieure (41) et un modèle de mâchoire inférieure (42), un modèle de représentation (5) physique couplé au dispositif de traitement de données et de commande (2) par au moins un moyen de transmission de données et/ou de signaux et comportant un modèle de représentation de mâchoire supérieure (51) et un modèle de représentation de mâchoire inférieure (52) couplé mécaniquement à celui-ci, lesquels peuvent être déplacés manuellement en translation et en rotation l'un par rapport à l'autre dans un plan de réglage, et au moins un dispositif de détection (81, 82) couplé au dispositif de traitement de données et de commande (2), avec lequel des modifications de position du modèle de représentation de mâchoire supérieure (51) et du modèle de représentation de mâchoire inférieure (52) peuvent être détectées, **caractérisé en ce qu'**entre le modèle de représentation de mâchoire supérieure (51) et le modèle de représentation de mâchoire inférieure (52), au moins trois éléments d'écartement (61, 62) sont prévus, lesquels définissent le plan de réglage entre le modèle de représentation de mâchoire supérieure (51) et le modèle de représentation de mâchoire inférieure (52), peuvent être réglés en longueur par la commande du dispositif de traitement de données et de commande (2) en fonction d'une position relative entre le modèle de mâchoire supérieure (41) et le modèle de mâchoire inférieure (42) calculée par le dispositif de traitement de données et de commande (2) à partir de modifications de position du modèle de représentation de mâchoire supérieure (51) et du modèle de représentation de mâchoire inférieure (52), et modifient une position relative entre le modèle de représentation de mâchoire supérieure (51) et le modèle de représentation de mâchoire inférieure (52) à partir desdits réglages de longueur.

2. Système de contrôle d'occlusion selon la revendication 1, **caractérisé en ce que** le système de contrôle d'occlusion (1) présente en outre un dispositif d'affichage (3) couplé au dispositif de traitement de données et de commande (2) et sur lequel le modèle de mâchoire supérieure (41) et le modèle de mâchoire inférieure (42) ainsi que leur position relative en fonction de mouvements relatifs du modèle de représentation de mâchoire supérieure (51) et du modèle de représentation de mâchoire inférieure (52) peuvent être affichés l'un par rapport à l'autre.

3. Système de contrôle d'occlusion selon l'une des revendications précédentes,
**caractérisé en ce que**
- les éléments d'écartement (61, 62) sont prévus de manière à être reliés au modèle de représentation de mâchoire supérieure (51) de manière solidaire d'un côté et de manière à pouvoir coulisser sur le modèle de représentation de mâchoire inférieure (52), ou
- les éléments d'écartement (61, 62) sont prévus de manière à être reliés au modèle de représentation de mâchoire inférieure (52) de manière solidaire d'un côté et de manière à pouvoir coulisser sur le modèle de représentation de mâchoire supérieure (51), ou
- une plaque intermédiaire est prévue entre le modèle de représentation de mâchoire supérieure (51) et le modèle de représentation de mâchoire inférieure (52), sur ou dans laquelle les éléments d'écartement (61, 62) sont fixés et depuis un côté de laquelle les éléments d'écartement (61, 62) peuvent être modifiés en longueur dans la direction du modèle de représentation de mâchoire supérieure (51) et depuis un autre côté de laquelle les éléments d'écartement (61, 62) peuvent être modifiés en longueur dans la direction du modèle de représentation de mâchoire inférieure (52).

4. Système de contrôle d'occlusion selon l'une des revendications précédentes,
**caractérisé en ce que** le dispositif de détection (81, 82) présente au moins un corps de commande couplé mécaniquement au modèle de représentation de mâchoire supérieure (51) et/ou au modèle de représentation de mâchoire inférieure (52), avec lequel corps de commande des forces de poussée et/ou de rotation exercées sur le modèle de représentation de mâchoire supérieure (51) et/ou le modèle de représentation de mâchoire inférieure (52) peuvent être converties en signaux pour le dispositif de traitement de données et de commande (2).

5. Système de contrôle d'occlusion selon l'une des revendications précédentes,
**caractérisé en ce que** les éléments d'écartement (61, 62) sont des actionneurs, des servomoteurs, des éléments piézoélectriques et/ou des bobines mobiles, lesquels sont réglables en longueur.

6. Système de contrôle d'occlusion selon l'une des revendications précédentes,
**caractérisé en ce que** le modèle de représentation de mâchoire supérieure (51) est couplé au modèle de représentation de mâchoire inférieure (52) par au moins un élément de ressort ou de pression.

7. Système de contrôle d'occlusion selon l'une des revendications précédentes,
**caractérisé en ce que** le système de contrôle d'occlusion (1) présente un refroidissement pour les éléments d'écartement (61, 62).

8. Système de contrôle d'occlusion selon l'une des revendications précédentes,
**caractérisé en ce que** le modèle de représentation de mâchoire supérieure (51) et/ou le modèle de représentation de mâchoire inférieure (52) sont des demi-coques ou des plaques adaptées à une taille typique d'une surface de préhension de paume d'un adulte.

9. Procédé permettant le contrôle de l'occlusion, dans lequel des données de dimensions d'un modèle dentaire numérique (4) présentant un modèle de mâchoire supérieure (41) et un modèle de mâchoire inférieure (42) sont stockées dans un dispositif de traitement de données et de commande (2), sur un modèle de représentation (5) physique qui présente un modèle de représentation de mâchoire supérieure (51) et un modèle de représentation de mâchoire inférieure (52) couplé mécaniquement à celui-ci, le modèle de représentation de mâchoire supérieure (51) et le modèle de représentation de mâchoire inférieure (52) sont déplacés manuellement en translation et/ou en rotation l'un par rapport à l'autre dans un plan de réglage, des modifications de position du modèle de représentation de mâchoire supérieure (51) et du modèle de représentation de mâchoire inférieure (52) sont détectées par un dispositif de détection (81, 82) et transmises au dispositif de traitement de données et de commande (2), le dispositif de traitement de données et de commande (2) calcule une positive relative associée entre le modèle de mâchoire supérieure (41) et le modèle de mâchoire inférieure (42) à partir desdites modifications de position puis, lorsque dans ladite position relative, au moins une pénétration d'arcade dentaire et/ou au moins une désolidarisation d'arcade dentaire du modèle de mâchoire supérieure (41) et du modèle de mâchoire inférieure (42) sont présentes, au moins un signal est transmis au modèle de représentation (5), par lequel signal au moins l'un d'au moins trois éléments d'écartement (61, 62) prévus entre le modèle de représentation de mâchoire supérieure (51) et le modèle de représentation de mâchoire inférieure (52) et définissant le plan de réglage entre le modèle de représentation de mâchoire supérieure (51) et le modèle de représentation de mâchoire inférieure (52) sont réglés en longueur, moyennant quoi une modification pouvant être détectée de manière haptique de la position relative entre le modèle de représentation de mâchoire supérieure (51) et le modèle de représentation de mâchoire inférieure (52) est effectuée sur le modèle de représentation (5).

10. Procédé selon la revendication 9, **caractérisé en ce que** le modèle de mâchoire supérieure (41) et le modèle de mâchoire inférieure (42) ainsi que leur position relative en fonction de mouvements relatifs du modèle de représentation de mâchoire supérieure (51) et du modèle de représentation de mâchoire inférieure (52) sont affichés l'un par rapport à l'autre avec un dispositif d'affichage (3) couplé au dispositif de traitement de données et de commande (2).

11. Procédé selon la revendication 9 ou 10, **caractérisé en ce qu'**un mouvement de correction du modèle de mâchoire supérieure (41) et/ou du modèle de mâchoire inférieure (42) calculé pour un contact occlusal présupposé entre le modèle de mâchoire supérieure (41) et le modèle de mâchoire inférieure (42) et renvoyé aux éléments d'écartement (61, 62) du modèle de représentation (5) par l'intermédiaire d'une interface du dispositif de traitement de données et de commande (2) est proportionnellement agrandi par rapport à un réglage de longueur requis pour un modèle dentaire physique présentant des dimensions de mâchoires réelles.
